# EUROPEAN PATENT APPLICATION

(11) **EP 1 385 113 A2**
(43) Date of publication of application: **28.01.2004**
(21) Application number: 03013577.6
(22) Date of filing: 13.06.2003
(51) Int. Cl.: G06K 1/12

(54) **Method of detecting bad dots in bar code print zone**

(30) Priority: 25.07.2002 US 205564
(71) Applicant: Paxar Americas, Inc., Miamisburg, Ohio 45342 (US)
(72) Inventor: Gallant, John Michael, Dayton, Ohio 45459 (US)
(74) Representative: von Hellfeld, Axel, Dr. Dipl.-Phys.

(57) **Abstract**

A barcode printer (10) stores a list of failed printhead elements. From data associated with a record member, i.e. label, tag or the like, to be printed, a microprocessor (18) of the barcode printer determines left and right boundaries of a print zone for that record member. The microprocessor determines which failed printhead elements in the stored list fall within the boundaries of the print zone to generate a sublist of failed printhead elements in the print zone so that the bad dots that affect printing can more quickly and easily be dealt with.

## Description

### FIELD OF THE INVENTION

The present invention is directed to a barcode printer and more particularly to a method of operating a barcode printer to determine whether failed printhead elements are within an actual print zone of a record member to be printed.

### BACKGROUND OF THE INVENTION

Printers are known that monitor the resistance of individual elements or dots of a thermal printhead to determine whether the dot has failed. For barcode printers, schemes are utilized for shifting the location of a barcode to avoid bad dots. Typically, if the number of bad dots exceeds a predetermined number, a printhead failure indication is provided and the printer is prevented from printing. It has been found, however, that more dots fail near the edges of the printhead than centrally located dots because of edge wear. Edge wear is typically found in label printers that can print on labels of different widths. When these printers print on smaller width labels such that the label does not extend the full width of the printhead, edge wear is caused by the platen abrading the printhead in the area(s) where the label does not extend. Edge wear occurs in printers in which the labels are center justified and in printers in which the labels are edge justified. Because of edge wear, printhead failure can be indicated when the predetermined number of edge dots fails even though the dots actually used for printing have not failed.

### BRIEF SUMMARY OF THE INVENTION

In accordance with the present invention, the disadvantages of prior bad dot detection methods for printers have been overcome. The method of operating a barcode printer in accordance with the present invention determines the printhead elements within a print zone that have failed so that failed printhead elements outside of the print zone do not affect the operation of the barcode printer.

More particularly, the method of operating a barcode printer in accordance with the present invention uses a stored list of failed printhead elements generated from a previously run printhead test. Data to be printed on a record member such as a label, tag, or the like is received by the printer and the left and right boundaries of the print zone for the record member are determined. The barcode printer thereafter determines whether a failed printhead element identified in the stored list is to the right of the left boundary of the print zone and to the left of the right boundary of the print zone in order to determine whether a failed printhead element is in the print zone. Thereafter, the barcode printer generates and stores information representing a subset of the failed printhead element list, the subset representing the failed printhead elements in the print zone.

In accordance with one embodiment of the present invention, the information representing the subset includes the identity of the first failed printhead element in the list that is in the print zone and the number of failed printhead elements that are in the print zone. Alternatively, the subset identifies each of the failed printhead elements in the print zone.

The method of the present invention allows the barcode printer to analyze only the subset of failed printhead elements that are in the print zone to determine whether printing of a record member can proceed and/or the subset can be used to shift the position of a barcode so as to avoid failed printhead elements that are in the print zone. Because the subset list is employed to make these decisions instead of the full list of failed printhead elements, the barcode printer of the present invention can more quickly and appropriately deal with failed printhead elements.

These and other advantages and novel features of the present invention, as well as details of an illustrated embodiment thereof, will be more fully understood from the following description and drawings.

### BRIEF DESCRIPTION OF THE SEVERAL VIEWS OF THE DRAWING

Fig. 1 is a block diagram of a barcode printer in accordance with the present invention;
Fig. 2 is an illustration of the elements of a printhead and the print zone of a printed record member; and
Fig. 3 is a flow chart illustrating the method of determining failed printhead elements within the print zone.

### DETAILED DESCRIPTION OF THE INVENTION

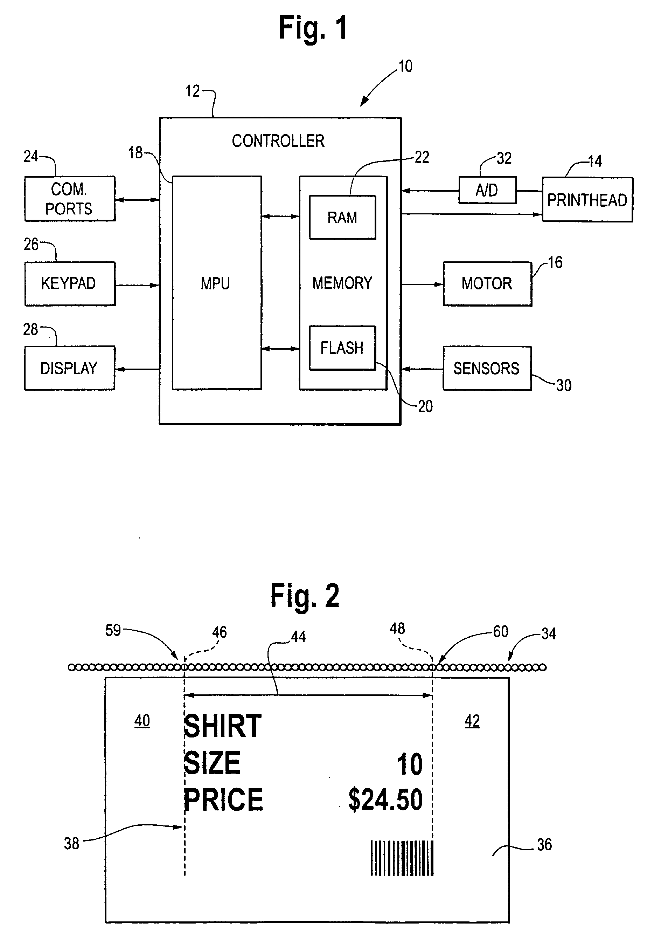

A barcode printer 10 as shown in Fig. 1 includes a controller 12 that controls a printhead 14 to print on a web of record members, such as labels, tags or the like, as the record members are driven past the printhead 14 by one or more rollers, not shown, driven by a motor 16. The controller 12 includes a microprocessor 18 that operates in accordance with a program stored in a flash memory 20 to print data stored in a RAM 22. The data to be printed as well as font and format information are received by the barcode printer 10 via one of a number of communication ports 24. The communication ports preferably include a serial port and/or a parallel port which provide bi-directional communication to a host computer or peripheral device.

The barcode printer 10 also includes a keypad 26 and display 28. The keypad 26 may be a full keyboard. However, in a preferred embodiment, the keypad 26 has only a limited number of keys that are actuable by a user to make selections from a menu depicted on the display 28. The keypad 26 may also be used to control one or more operations of the printer, for example: the advancement of a web of record members through the printer, the start of a print job, etc. The barcode printer includes a number of sensors 30, such as a black mark sensor used to accurately register a record member with respect to the printhead 14, a temperature sensor associated with the printhead 14, an out of stock sensor, etc., wherein the status information derived from these sensors is depicted on the display and/or communicated via the communication port 24.

The controller 12, during a print test, monitors the resistance associated with each print element or dot of the printhead 34. The resistance values of the printhead elements are coupled to the controller 12 via an analog to digital converter 32. In response to the resistance values, the controller 12 determines whether a printhead element is bad or has failed. The microprocessor 18 stores a list of each of the failed printhead elements in the RAM 22. In a preferred embodiment, the list of failed printhead elements is an ordered list. For example, the list may be ordered in accordance with the position of the printhead elements starting with the left side of the printhead 14.

When a new label is to be printed, the microprocessor 18 determines a sublist of failed printhead elements that fall within the actual printing zone for the record member to be printed. As illustrated in Fig. 2, the printhead 14 includes a number of individual print elements 34 for printing on a center justified label 36. As seen in Fig. 2, because the label 36 does not extend the full width of the printhead 14, edge wear can result. The label 36 is aligned with the printhead 14 so that a particular print element 34 prints a dot at a respective position along the width of the label 36. The print zone 38 is that area of the label 36 in which printing can occur. The print zone is bounded by a left margin 40 and a right margin 42, there being no printing in the margins. The width 44 of the print zone 38 is represented by the distance or number of element or dot positions from the left most element or dot 46 used to print on the label 36 to the right most element or dot 48 used to print on the label 36. Because the microprocessor 18 generates a sublist of failed printhead elements in the print zone 38, the barcode printer 10 of the present invention can more quickly accommodate or deal with failed printhead elements than has heretofore been possible. It is noted, that because the barcode printer 10 can print data in various formats on . record members of various sizes, the print zone 38 may vary considerably from label to label.

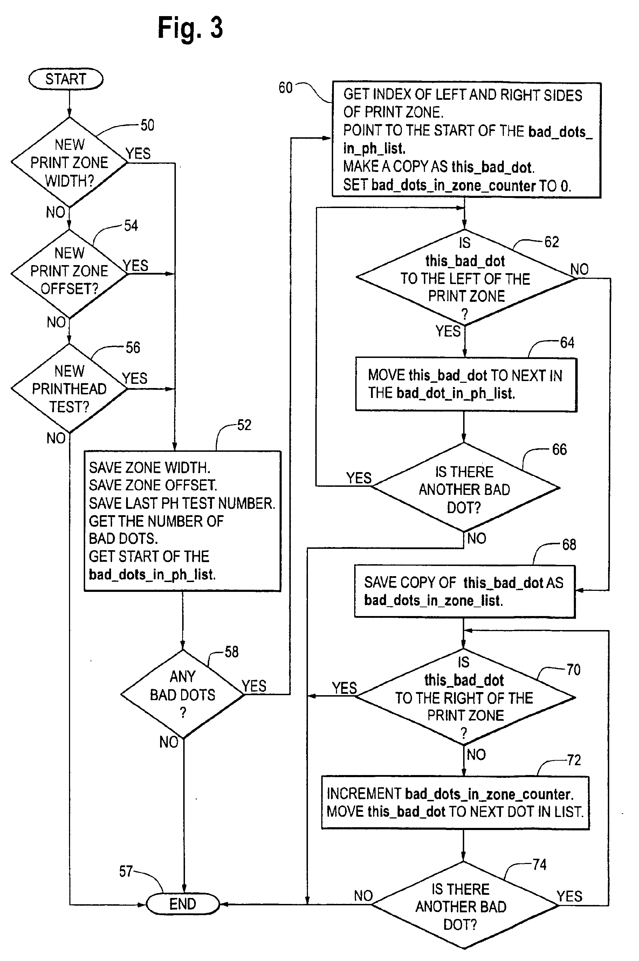

The sublist of failed printhead elements in the print zone 38 of a record member is generated in accordance with the flow chart of Fig. 3. When a new label is to be printed, the routine of Fig. 3 starts at a block 50. At block 50, the microprocessor 18 determines whether there is a new print zone width 44 associated with the label to be printed. If so, the microprocessor 18 saves the new print zone width at block 52. It is noted, that the print zone width can be a part of, associated with or derived from the received format information for the label to be printed. As is well known in the art, the format determines the location of information printed on a record member. The format information for a given label can be received via the communication port 24 with the data to be printed on the label or it can be stored in a memory of the printer. In a preferred embodiment, the barcode printer 10 stores information defining a number of formats in the flash memory 20 wherein a particular format is selected via information received with the data to be printed. The format may also be selected independent of the receipt of the data, for example, by an application program stored in the flash memory 20. It is further noted that the print zone width can also be derived from the image of the label to be printed, wherein the image is generated from the received print data and stored in the RAM 22 prior to printing as is well known in the art.

At a block 54, the microprocessor 18 determines whether a new print zone offset has been set. The print zone offset shifts the print zone with respect to the printhead elements 34 so as to aid in properly registering a record member 36 with the printhead 34. If a new print zone offset has been set as determined at block 54, the offset is saved at block 52. At block 56, the microprocessor 18 determines whether a new printhead test has been implemented and if so, the microprocessor 18 at block 52 saves the last printhead test number. At block 52, the microprocessor 18 also obtains the number of bad dots from the stored results of the last printhead test and further obtains from the last printhead test the starting position of the bad dot list. If the print zone width for the current label to be printed or offset have not changed from the preceding label and there has not been a new printhead test, the microprocessor exits the routine of Fig. 3 at block 57. Otherwise, the microprocessor 18 proceeds to block 58.

The microprocessor 18, at block 58, determines whether any of the printhead elements 34 of the printhead 14 have failed. If so, the microprocessor 18 proceeds to block 60. At blocks 60, the microprocessor 18 determines an index to the left and right sides or boundaries of the print zone of the current record member to be printed from the print zone width and the print zone offset. The index to the left side of the print zone will point to the print element position 59 adjacent and to the left of the left most print element 46 used to print the label 36. Similarly, the index to the right side of the print zone 60 will point to the print element position 60 adjacent and to the right of the right most print element 48 used to print the label 36. At block 60, the microprocessor 18 also points to information representing the first failed printhead element in the bad_dots_in _printhead_list, which is an index to the first failed printhead element, and stores a copy of this index. At block 60, the microprocessor 18 also sets a bad_dots_in_zone_counter to zero. From block 60, the microprocessor 18 proceeds to block 62 to determine whether the failed printhead element pointed to at block 60 is to the left of the print zone 38. If not, the microprocessor 18 proceeds to block 68 to save the current pointer to the bad_dots_in _printhead_list as the start of the bad_dots_in_zone_list wherein the pointer identifies the first failed printhead element in the print zone.

If, at block 62, the microprocessor 18 determines that the failed printhead element pointed to at block 60 is to the left of the print zone 38 and therefore outside of the print zone, the microprocessor 18 proceeds to block 64 to increment the pointer to the next failed print element in the bad_dots_in_printhead_list. Thereafter, at block 66, the microprocessor 18 determines whether the incremented pointer is pointing to another failed print element in the bad dot list and if so, the microprocessor proceeds back to block 62 to determine whether this bad dot is to the left of the print zone.

Once the first failed print element that falls to the right of the left side or boundary of the print zone is identified at block 62 and the pointer to that bad dot saved at block 68, the microprocessor proceeds to block 70. At block 70, the microprocessor determines whether this failed printhead element is to the right of the print zone 38. If not, the failed print element is determined to be within the print zone 38 and the bad_dots_in_zone_counter is incremented at block 72. At block 72, the microprocessor 18 also increments the pointer to the bad_dots_in_printhead_list to the next position in the list. At block 74, the microprocessor 18 determines whether the pointer is pointing to another failed print element and if so, the microprocessor proceeds back to block 70. Again, at block 70, the microprocessor 18 determines whether this next failed print element is to the right of the print zone or within the print zone. Upon identifying a failed print element to the right of the print zone 38 and thus outside the print zone, the microprocessor exits the routine. Similarly, if there are no other failed print elements identified in the bad_dots in_printhead_list at blocks 66 and 74, the microprocessor 18 exits the routine of Fig. 3. Upon completion of the routine of Fig. 3, the microprocessor 18 has stored in the RAM 22 a sublist of the failed print elements in the print zone 38 wherein this sublist includes a pointer to the first determined failed print element in the print zone 38 and the total number of failed print elements in the print zone 38. This information with the bad_dots_in _printhead_list identifies each of the failed print elements in the print zone.

The sublist of failed print elements in the print zone of the current record member to be printed is used to determine whether printing can occur by comparing the number of failed elements in the print zone to a predetermined number. If the number of failed elements in the print zone exceeds the predetermined number, the printer 10 provides an indication on the display 28 that the printhead has failed. If the number of failed elements in the print zone does not exceed the predetermined number, the microprocessor 18 uses the sublist to shift the barcode, if necessary, so that the failed elements are aligned with a space between adjacent bars of the barcode. In this way, the failed print elements do not impair the quality of a printed barcode.

Many modifications and variations of the present invention are possible in light of the above teachings. For example, although the present invention has been described for a center justified label, the invention can also be used for an edge justified label. When used in a printer that aligns labels with an edge of the printhead, the method of the present invention might identify only one boundary of the print zone. For example, in a printer with edge justified labels, the microprocessor might determine the right boundary of the print zone and thereafter determine whether a failed printhead element in the list is to the left of the right boundary and thus in the print zone. Further, instead of utilizing the print area width to determine the left and right sides of the print zone, the microprocessor 18 may utilize data representing the size or width of the left margin 40 and the right margin 42. Similarly, instead of merely saving the identity of the first failed print element in the print zone and the total number of failed elements in the print zone, the sublist may contain the identity of or a pointer to each of the failed print elements in the print zone. Many other modifications may be made to the embodiments of the present invention described herein. Thus, it is to be understood that, within the scope of the appended claims, the invention may be practiced otherwise than as described hereinabove.

## Claims

1. A method of operating a barcode printer, having a printhead with a plurality of elements each actuable to print, to determine failed printhead elements in a print zone of a record member, comprising:
receiving data to be printed on a record member carried on a web;
receiving information representing a width of a print zone of the record member;
storing a list of failed printhead elements;
determining a left boundary and a right boundary of the print zone of a record member in response to the received print area width;
determining whether there is a failed printhead element in the list that is to the right of the left boundary of the print zone and to the left of the right boundary of the print zone to determine whether a failed printhead element in the list is in the print zone; and
storing information representing a subset of the failed printhead element list, the subset representing the failed printhead elements in the print zone.

2. A method as recited in claim 1 including storing a print offset and wherein the determining of the left and right boundaries of the printhead print zone is determined in response to the received print zone width and print offset.

3. A method of operating a barcode printer having a printhead with a plurality. of elements each actuable to print to determine failed printhead elements in a print zone of a record member, comprising:
receiving data to be printed in a selected format on a record member carried on a web;
storing a list of failed printhead elements;
determining a left boundary and a right boundary of the print zone of a record member in response to the selected format;
determining whether there is a failed printhead element in the list that is to the right of the left boundary of the print zone and to the left of the right boundary of the print zone to determine whether a failed printhead element in the list is in the print zone; and
storing information representing at least one failed print element in the print zone.

4. A method of operating a barcode printer having a printhead with a plurality of elements each actuable to print to determine failed printhead elements in a print zone of a record member, comprising:
receiving data to be printed on a record member carried on a web;
storing a list of failed printhead elements;
determining whether the failed printhead elements in the list are in a print zone of the record member to be printed; and
storing information representing a subset of the failed printhead element list, the subset representing the failed printhead elements in the print zone.

5. A method as recited in claim 4 wherein the stored subset includes information representing the first failed printhead element in the list that is in the print zone and the number of failed printhead elements that are in the print zone.

6. A method as recited in claim 5 including comparing the number of failed printhead elements that are in the print zone to a predetermined number to provide an indication of a failed printhead if the number of failed print elements in the print zone exceeds the predetermined number.

7. A method as recited in claim 4 including shifting a location of a barcode to be printed on the record member in response to the subset of failed printhead elements.

8. A method as recited in claim 4 wherein said determining step includes identifying at least one boundary of the print zone and comparing a failed printhead element in the list to the boundary to determine whether the failed print element is in the print zone of the record member.

9. A method of operating a barcode printer having a printhead with a plurality of elements each actuable to print to determine failed printhead elements in a print zone of a record member, comprising:
receiving data to be printed on a record member carried on a web;
storing a list of failed printhead elements;
determining a left boundary and a right boundary of the print zone of a record member;
determining whether there is a failed printhead element in the list that is to the right of the left boundary of the print zone and to the left of the right boundary of the print zone to determine whether a failed printhead element in the list is in the print zone; and
storing information representing a subset of the failed printhead element list, the subset representing the failed printhead elements in the print zone.

10. A method of operating a barcode printer having a printhead with a plurality of elements each actuable to print to determine failed printhead elements in a print zone of a record member, comprising:
receiving data to be printed on a record member carried on a web;
storing a list of failed printhead elements;
determining a boundary of the print zone of a record member;
determining whether there is a failed printhead element in the list that is on a print zone side of the boundary; and
storing information representing a subset of the failed printhead element list, the subset representing the failed printhead elements in the print zone.
